# EUROPÄISCHE PATENTSCHRIFT

(11) **EP 3 644 709 B1**
(45) Veröffentlichungstag und Bekanntmachung des Hinweises auf die Patenterteilung: **23.12.2020**
(21) Anmeldenummer: 18742899.0
(22) Anmeldetag: 29.06.2018
(51) Int. Cl.: A01G 9/04, A01G 27/00

(54) **BLUMENTOPF**
FLOWER POT
POT DE FLEURS

(30) Priorität: 29.06.2017 AT 505322017
(43) Veröffentlichungstag der Anmeldung: 06.05.2020
(73) Patentinhaber: Hemerka, Alfred, 1180 Wien (AT)
(72) Erfinder: Hemerka, Alfred, 1180 Wien (AT)
(74) Vertreter: Sonn & Partner Patentanwälte
(86) Internationale Anmeldenummer: PCT/AT2018/060129
(87) Internationale Veröffentlichungsnummer: WO 2019/000007

(56) Entgegenhaltungen:
- WO-A1-2014/134662
- CH-A5- 572 301
- CN-A- 102 972 226
- DE-A1- 1 757 017
- US-A- 5 638 638
- US-A1- 2010 162 624
- US-A1- 2015 250 107
- US-B1- 6 510 653

## Beschreibung

Die Erfindung betrifft einen Blumentopf mit den Merkmalen des Oberbegriffs von Anspruch 1.

Im Stand der Technik sind verschiedenste Ausführungen solcher Blumentöpfe bekannt. Beispielsweise sind solche Blumentöpfe in der US 2010/162624 A1 und US 5,638,638 A gezeigt.

Die DE 75 35 997 U zeigt einen gattungsgemäßen Pflanzentopf für Hydro- und Erdkulturen mit einem die Pflanze aufnehmenden Innentopf, dessen Wand mehrere Wasserdurchlässe aufweist. In der Seitenwand des Innentopfes befinden sich streifenförmige Einbuchtungen, die in gleichmäßigen Abständen über den Umfang verteilt angeordnet sind und, vom Boden ausgehend, bis in die Höhe eines Zwischenbodens ragen. Drei der Einbuchtungen stellen jeweils offene Durchbrüche dar, durch die hindurch Wasser in den Innentopf gelangen kann. Die oberen Enden der Einbuchtungen, die in das Innere des Innentopfs hinein vorstehen, bilden ein Auflager für den Zwischenboden. Bei einer Verwendung für Hydrokulturen wird der Zwischenboden herausgenommen. Für eine Erdkultur wird der Zwischenboden eingesetzt. In beiden Fällen wird der Innentopf vollständig in einen mit Wasser befüllten Außentopf eingesetzt. Zur Kontrolle des Wasservorrats ist ein herkömmlicher Wasserstandsanzeiger mit einer Schwimmerkugel in einem zylindrischen Rohr vorgesehen.

Nachteilig daran ist insbesondere die komplizierte, voluminöse Ausgestaltung des bekannten Hydro-Pflanzentopfes. Weiters ist der Wasserstandsanzeiger unzuverlässig und zudem konstruktiv aufwändig.

Die DE 20 2015 100256 U1 zeigt einen Aufbewahrungsbehälter für einen Pflanztopf. Am unteren Ende des Aufbewahrungsbehälters befindet sich ein Boden, der mit einer Seitenwand ein Wasserreservoir ausbildet. Dieses dient zur Aufnahme von Wasser und zur Versorgung des integrierten Pflanztopfes mit Wasser. Die Seitenwand weist über die gesamte Höhe mit Ausnahme eines oberen, über ein als Haltekragen dargestelltes Auflager nach außen gestellten Seitenwandabschnittes ein Dekorelement auf, welches vorliegend ein Dekor in Form einer Vielzahl von kleinen Mustern aufweist. Über das Auflager kann ein Pflanztopf hängend in dem Aufbewahrungsbehälter angeordnet werden, gleichzeitig ist er über den Seitenwandabschnitt in seiner Bewegung nach außen begrenzt und besitzt einen definierten Sitz. Das Dekorelement weist mehrere Markierungen auf, die einen maximalen Wasserstand bzw. eine maximale Füllhöhe des Wasserreservoirs anzeigen sollen. Beide Markierungen sind seitlich einer Wasserstandanzeige angeordnet, die durch ein Sichtfenster ausgebildet ist. Dieses Sichtfenster ergibt sich durch eine Ausnehmung im Dekor und den transparenten Kunststoff der weiteren Seitenwand im dekorfreien Bereich. Die Wasserstandanzeige wird somit durch eine Ausnehmung im Dekor ausgebildet bzw. von dieser begrenzt.

Die DE 33 17 785 A1 zeigt einen Heterokultur-Pflanztopf in Form eines doppelwandigen Pflanzentopfelements. Der Topf dient zur Heterogenisierung von Zierpflanzen, wobei er als Verbindungsvorrichtung zwischen zwei Pflanzenkulturarten eingesetzt wird, beispielsweise zum Zweck der Langzeitbewässerung, der Intensivierung der generativen Vermehrung (Blühfaktor) bzw. zur natürlichen Wurzelausbreitung. Die Wurzelballenbefeuchtung geschieht nun zum einen durch den feingranulatig gefüllten Innenvorrichtungsschaft, welcher über den Bodendurchbruch mit dem anschließenden Innentopfbodenbelüftungs-, -befeuchtungs- und - drainagegranulat verbunden ist. Das über das mit Durchbrüchen versehene Außenrand-Distanzstück eingefüllte Wasser steht maximal bis zur Mitte des Innenpflanztopfteils und füllt den Raum aus, womit auch das Granulat im kleinen Schacht feuchtgehalten wird. Auch nehmen die Wurzeln den Weg durch die aufsteigenden Schächte, und dann den Weg wie zuvor beschrieben abwärts durch die Doppeltopfwandung und Außenschaftdurchbrüche.

Die DE 2106439 A1 zeigt einen universell verwendbaren Blumentopf mit Wasserspeicher, bei dem von weiterer Entfernung zu sehen ist, wie hoch der Wasserstand ist. Um ein leichtes Reinigen des Wasserbehälters zu ermöglichen, ist dieser nur leicht aufgeschraubt und kann jederzeit - ohne die Blumen umtopfen zu müssen - gereinigt werden. Der Blumenstopf weist eine Auflagekante für eine Zwischeneinlage und den Boden mit Wasserlöchern auf. Der Wasserspeicher kann ganz aus durchsichtigem Kunststoff oder nur mit senkrechten Sehschlitzen ausgeführt werden, um den Wasserstand deutlich kontrollieren zu können.

Die DE 10 2011 005195 A1 zeigt ein Transportbehältnis zum Transportieren von Pflanzen, welches mindestens einen teilweise mit Wasser befüllbaren Übertopf mit einem Boden aufweist. Es hat ferner einen durch den Boden und eine Seitenwandung begrenzten Aufnahmeraum zur Aufnahme eines zu transportierenden Pflanztopfs und mindestens eine in der Seitenwandung vorgesehene Wasserstandsanzeige zur Anzeige eines aktuellen Wasserstands in dem Übertopf. Der Übertopf kann rund oder eckig sein. Die Anordnung der Wasserstandsanzeiger ermöglicht ein Ablesen des Wasserstands von mehreren Seiten aus.

Abgesehen von den bekannten Hydrokulturgefäßen und Lösungen, die auf dem Wasserspeichervermögen des Substrats beruhen, haben sich Erfindungen im Bereich der Gefäße in Form von Erdhydrogefäßen und Orchideenübertöpfen mit einem begrenzten Wasservorrat im unteren Bereich für eine mehrtägige Bewässerung durchgesetzt. Aktuell sind die meisten Gefäße also für eine bestimmte Art von Substrat optimiert, verwenden fehleranfällige Wasserstandsanzeiger, schwer ablesbare Sichtfenster bzw. veralgende, durchscheinende oder durchsichtige Materialien oder geben dem Gärtner ohne Entfernen des Innentopfes gar kein Feedback über die eingebrachte Wassermenge. Erdhydrogefäße sind zudem kompliziert aufgebaut und entsprechend teuer in der Herstellung. Orchideenübertöpfe mit Wasservorrat sind zwar einfach gebaut, werden aber aufgrund der konischen Form zunehmend instabil und verfügen nur über einen sehr begrenzten Wasservorrat.

Demgegenüber besteht die Aufgabe der vorliegenden Erfindung darin, zumindest einzelne Nachteile des Standes der Technik zu lindern bzw. zu beseitigen. Die Erfindung setzt sich insbesondere zum Ziel, einen vielseitig verwendbaren Blumen- bzw. Übertopf zu schaffen, welcher für verschiedene Pflanzenkulturen, insbesondere für Hydro- und Erdkulturen, vorzugsweise auch unter Verwendung von Innentöpfen, gleichermaßen geeignet ist, wobei das Wasserreservoir einfach und zuverlässig überprüfbar sein soll und bevorzugt so gestaltet ist, dass nicht zuletzt für die Verwendung im Außenbereich gleichzeitig eine sinnvolle Begrenzung der Wassermenge bewirkt wird.

Diese Aufgabe wird durch einen Blumentopf mit den Merkmalen von Anspruch 1 gelöst. Bevorzugte Ausführungsformen sind in den abhängigen Ansprüchen angegeben.

Bei dem erfindungsgemäßen Blumentopf ist vorgesehen, dass
- die Seitenwand des Außenelements eine geringere Höhe als der Mantel des Innenelements aufweist und dass
- zwischen dem Innenelement und dem Außenelement zumindest eine Füll- und Sichtöffnung zum Einfüllen von Flüssigkeit in den Flüssigkeitsvorratsraum und zur Sichtkontrolle eines Pegels der Flüssigkeit in dem Flüssigkeitsvorratsraum des Außenelements ausgebildet ist.

Das Außenelement des Blumentopfes ist daher als Flüssigkeitsvorratsbehälter ausgebildet, in welchem Gieß- bzw. Nährflüssigkeit vorgehalten werden kann. In dem Außenelement ist das Innenelement abgestellt, welches zur Aufnahme einer Pflanze dient. Zur Versorgung der Pflanze mit der Gieß- bzw. Nährflüssigkeit aus dem Flüssigkeitsvorratsraum des Außenelements sind am umlaufenden Mantel des Innenelements die Flüssigkeitsdurchtrittsöffnungen vorgesehen.

Je nach Ausführung kann eine Hydrokultur oder eine Erdkultur im Inneren des Innenelements angelegt werden. Im Fall der Hydrokultur kann das Innenelement mit herkömmlichem Hydrosubstrat befüllt werden.

Bei einer Erdkultur kann eine Pflanze, beispielsweise eine Orchidee, in einem Innentopf in das Innenelement gestellt werden. Im Gebrauchszustand ist der Innentopf mit der Erdkultur vorzugsweise so in dem Innenelement gehalten, dass sich ein Boden des Innentopfes oberhalb der oberen Enden der Flüssigkeitsdurchtrittsöffnungen befindet. Dadurch können die Wurzeln der Erdpflanze durch Durchtrittsöffnungen des Innentopfes in den unteren Bereich des Innenelementes wachsen, welcher von dem Außenelement mit der Flüssigkeit versorgt wird. Bei dieser Ausführung wird die Pflanze zunächst über den Innentopf gegossen. Nach dem Einwachsen der Wurzeln der Pflanze kann die Bewässerung auch nur über das Außenelement erfolgen.

Das Innenelement kann ein Bodenteil aufweisen oder nach unten offen sein. Sofern es ein Bodenteil aufweist, kann in einer Anwendungsmöglichkeit die Erdkultur auch direkt im Innenelement angelegt werden, wenn das Innenelement vorzugsweise bis im Wesentlichen zum oberen Rand des Flüssigkeitsvorratsraumes je nach Wasserbedarf der Pflanze mit Drainagematerial, beispielsweise Kies, Leca oder kapillarisch leitendem Material wie Ziegelsplitt Semiramis, oder mit einer Wasserspeichermatte ausgefüllt ist. Bei dieser Anwendungsmöglichkeit entspricht die Funktion im Wesentlichen jener bekannter Erdhydrogefäße, jedoch ohne deren kompliziertem Aufbau. Insbesondere bei größerer Ausführung des Blumentopfes kann dies eine bevorzugte Anwendung darstellen, da in dieser Größe vielfach keine Innentöpfe verfügbar sind. Sofern das Innenelement unten offen ist, wird das Innenelement bevorzugt mit einem Innentopf verwendet. Bei dieser Ausführung bilden Außen- und Innenelement zusammen einen Übertopf, der durch die Teilung in das Innen- und Außenelement einen von außen sichtbaren Wasservorrat hat.

Wesentlich ist nun auch, dass das Außenelement wannen- bzw. schalenförmig, d.h. nach oben offen ausgebildet, ist, wobei die umlaufende Seitenwand des Außenelements den Mantel des Innenelements umschließt. Dadurch ist zumindest eine Füll- bzw. Sichtöffnung zwischen der Innenseite der Seitenwand des Außenelements und der Außenseite des Mantels des Innenelements ausgebildet. Diese Füll- bzw. Sichtöffnung erstreckt sich daher an den vom Innenelement freigelassenen Bereichen am oberen Ende des Flüssigkeitsvorratsraums des Außenelements. Da sich das Außenelement nur über einen Teil, beispielsweise weniger als die Hälfte, vorzugsweise über im Wesentlichen ein Drittel, der Höhe des Innenelements erstreckt, ist der Pegelstand in dem Außenelement von außen gut sichtbar. Dadurch kann vom Pfleger der Pflanze eine einfache Sichtkontrolle vorgenommen werden, ob sich ausreichend Flüssigkeit in dem Flüssigkeitsvorratsraum befindet. Weiters gewährleistet die wannen- bzw. schalenförmige Ausführung des Au-βenelements einen Überlauf bei einem Einsatz des Blumentopfes im Außenbereich - auch mit einer Hydrokultur. Gemäß einer besonders bevorzugten Ausführung ist der Blumentopf frei von einem (mechanischen) Wasserstandsanzeiger. Darüber hinaus können das Innen- und das Außenelement aus einem undurchsichtigen Material, vorzugsweise aus einem Plastik- oder einem Keramikmaterial, gefertigt sein. Anders als bei manchen bekannten Blumentöpfen sind Sichtfenster am Außenelement nicht erforderlich. Demnach wird ein besonders einfacher, vielseitig verwendbarer Blumentopf geschaffen, welcher die Vorteile bekannter Hydro- und Erdhydrotöpfe, nämlich das Vorhandensein eines Wasservorrats, mit den Vorteilen herkömmlicher Erdkultur-Töpfe, welche insbesondere in deren schlanken Design und einfachen Ausführung liegen, kombiniert.

Für die Zwecke dieser Offenbarung beziehen sich die Orts- und Richtungsangaben, wie "oben", "unten", "horizontal", "vertikal", "innen", "außen" etc., auf den bestimmungsgemäßen Gebrauchszustand des Blumentopfes auf einer horizontalen Abstellfläche.

Um einerseits ein ausreichendes Flüssigkeitsreservoir vorzusehen und andererseits die Kontrolle des Pegelstandes im Flüssigkeitsvorratsraum zu ermöglichen, ist es günstig, wenn das Verhältnis zwischen der Höhe der Seitenwand des Außenelements und der Höhe des Mantels des Innenelements (jeweils an der Außenseite gemessen) zwischen 1:5 und 1:1,5, vorzugsweise etwa 1:3, beträgt. Damit ist das Verhältnis zwischen der Höhe der Seitenwand des Au-βenelements und der Höhe des Mantels des Innenelements wesentlich größer als bei gewöhnlichen Untersetzern, welche keine Vorratsfunktion übernehmen, das Außenelement in seiner Funktion als Übertopf gleichzeitig aber auch niedriger als gewöhnliche Übertöpfe.

Um eine besonders stabile Anordnung zu ermöglichen, ist zwischen dem Außenelement und dem Innenelement bevorzugt eine Steckverbindung vorgesehen, mit welcher das Innenelement im montierten Zustand um dessen Längsachse kipp- und drehfest am Außenelement angeordnet ist. Die Steckverbindung weist korrespondierende Steckverbindungsteile am Innenelement und am Außenelement auf. Beim Zusammenbau des Blumentopfes werden das Außen- und das Innenelement über die Steckverbindung miteinander verbunden. Bevorzugt ist die Steckverbindung für ein Einstecken des Innenelements in das Außenelement im Wesentlichen in Längsrichtung des Innenelements (d.h. in Richtung dessen Längsachse) eingerichtet. Im montierten Zustand ist das Innenelement zumindest um dessen Längsachse drehfest am Außenelement angeordnet. Bevorzugt ist die Steckverbindung zudem dazu eingerichtet, eine Verkippung des Innenelements bezüglich dessen Längsachse zu begrenzen oder im Wesentlichen zur Gänze zu unterbinden. Dadurch ist das Innenelement zuverlässig an dem Außenelement gesichert und die Kombination erhält durch die größere Unterstützungsfläche mehr Stabilität als handelsübliche Übertöpfe in Form des Innenelements.

Zu Erzielung einer stabilen Verbindung weist die Steckverbindung bei einer bevorzugten Ausführungsform zumindest zwei, vorzugsweise vier, Steckverbinder und zumindest zwei, vorzugsweise vier, entsprechende Steckausnehmungen auf. Die Steckverbinder sind bevorzugt am Außenelement und die Steckausnehmungen am Innenelement vorgesehen. Weiters möglich ist eine noch stabilere Ausführung der Verbindung, bei der die Steckverbinder Vorsprünge und die Steckausnehmungen entsprechende Schlitze aufweisen. Vorsprünge sind dabei nur soweit sinnvoll, als die Stapelbarkeit beider Elemente nicht beeinträchtigt wird bzw. eine einfachere Trennung gestapelter Elemente erreicht werden soll.

Bei einer konstruktiv einfachen Ausführungsvariante des Innenelements, vorzugsweise aus Plastik, sind die Steckausnehmungen als Einbuchtungen (d.h. als nach innen einspringende Bereiche) in dem Mantel des Innenelements ausgebildet, wobei an den Einbuchtungen im Inneren des Innenelements oberseitige Aufstellflächen für einen Innentopf ausgebildet sind. Bei dieser Ausführung kann die Wandstärke des Mantels des Innenelements über dessen Längsrichtung im Wesentlichen konstant sein. Durch die Einbuchtung am Mantel des Innenelements wird außenseitig die Steckausnehmung für den Steckverbinder und innenseitig die Aufstellfläche für den Innentopf gebildet. Vorteilhafterweise übernehmen die Einbuchtungen daher zwei Funktionen, so dass eine materialsparende und somit kostengünstige Fertigung des Innenelements aus Plastik, insbesondere als Spritzgussteil, ermöglicht wird.

Darüber hinaus ist es aus fertigungstechnischen Gründen günstig, wenn die Steckverbinder als Ausbuchtungen (d.h. als nach oben vorspringende Bereiche) am Boden des Außenelements ausgebildet sind. Bei dieser Ausführungsform kann das Außenelement als Kunststoffteil mit einer im Wesentlichen gleichbleibenden Wandstärke ausgebildet sein. Diese Ausführung zeichnet sich durch geringen Materialeinsatz und niedrige Kosten aus.

Um den Zusammenbau des Blumentopfes zu erleichtern, ist es günstig, wenn sich die Steckverbinder und die Steckausnehmungen jeweils im Querschnitt in Längsrichtung des Innenelements zur Füll- und Sichtöffnung hin verjüngen. Vorteilhafterweise kann so das Einführen des Steckverbinders in die entsprechende Steckausnehmung einfacher gemacht werden. Beispielsweise können die Steckverbinder eine in Umfangsrichtung des Innenelements längliche Querschnittsform aufweisen. Es können jedoch auch kegelstumpfförmige Steckverbinder vorgesehen sein.

In einer alternativen bevorzugten Ausführungsform sind als Steckverbinder vorzugsweise im Wesentlichen senkrecht zur Seitenwand des Außenelements angeordnete Plattenteile vorgesehen, welche im montierten Zustand in schlitzförmigen Steckausnehmungen des Innenelements angeordnet sind. Je nach Ausführung können sich die Plattenteile über die gesamte Breite des Außenelements oder nur über einen Teil davon erstrecken.

Um einerseits die Steckverbindung mit den Plattenteilen zu ermöglichen und andererseits die Anordnung des Innentopfes in dem Innenelement zu erleichtern, sind die schlitzförmigen Steckausnehmungen bei einer bevorzugten Ausführungsvariante an Vertiefungen im Mantel des Innenelements ausgebildet, wobei an den Vertiefungen im Inneren des Innenelements oberseitige Auflagerflächen für einen Innentopf ausgebildet sind. Demnach weist das Innenelement bei dieser Ausführung, insbesondere an dessen unterem Endbereich, Vertiefungen (d.h. gegenüber den benachbarten Abschnitten nach innen einspringende Bereiche) auf, an denen die schlitzförmigen Steckausnehmungen für die Plattenteile vorgesehen sind. An den Oberseiten der Vertiefungen sind vorzugsweise im Wesentlichen horizontale Auflagerflächen für den Innentopf ausgebildet. Diese Ausführungsvariante eignet sich insbesondere für eine Fertigung des Innen- und Außenelementes aus einem Keramikmaterial.

Bei einer weiteren bevorzugten Ausführungsvariante weist das Innenelement einen vorzugsweise im Wesentlichen konischen oberen Abschnitt und einen vorzugsweise im Wesentlichen konischen unteren Abschnitt auf, welche über einen Verjüngungsabschnitt miteinander verbunden sind, wobei an dem Verjüngungsabschnitt im Inneren des Innenelements ein Absatz für einen Innentopf ausgebildet ist. Bei dieser Ausführung wird der Innentopf für eine Erdkultur am Absatz des Verjüngungsabschnitts gehalten.

Die oben erwähnte Auflager-, Absatz- bzw. Aufstellfläche des Innenelements für den Innentopf befindet sich jeweils auf Höhe von 75 Prozent bis 100 Prozent, vorzugsweise bei im Wesentlichen 80 Prozent, der Höhe der Seitenwand des Außenelements.

Bei Ausführung in Größen, für die es keine Innentöpfe mehr gibt, ist bevorzugt vorzusehen, dass die Auflager-, Absatz- bzw. Aufstellflächen gänzlich entfallen. Bei entsprechender Eigenstabilität des Innenelements kann auch auf die Steckverbindungen verzichtet werden.

Um bei kleinen Abmessungen des Blumentopfes großflächige Einfüll- und Sichtöffnungen zwischen dem Innen- und Außenelement zu schaffen, ist bevorzugt vorgesehen, dass der Mantel des Innenelements eine erste Querschnittsform, insbesondere einen im Wesentlichen kreisförmigen Querschnitt, und die Seitenwand des Au-ßenelements eine davon verschiedene zweite Querschnittsform, insbesondere einen im Wesentlichen rechteckigen Querschnitt, vorzugsweise einen im Wesentlichen quadratischen Querschnitt, aufweist.

Als Flüssigkeitsdurchtrittsöffnungen des Innenelements sind eine erste Schar von Öffnungen, insbesondere erste Schlitze, und eine zweite Schar von Öffnungen, insbesondere zweite Schlitze, vorgesehen, wobei die erste Schar von Öffnungen eine größere Erstreckung in Längsrichtung des Innenelements als die zweite Schar von Öffnungen aufweist. Bei dieser Ausführung können die unterschiedlich langen Flüssigkeitsdurchtrittsöffnungen zur Kontrolle des Flüssigkeitspegels in dem Flüssigkeitsvorratsraum herangezogen werden. Vorzugsweise sind die unterschiedlichen Flüssigkeitsdurchtrittsöffnungen im Umfangsrichtung abwechselnd am Umfang des Innenelements angeordnet. Vorzugsweise ist der Flüssigkeitsvorratsraum so dimensioniert, dass ein optimaler Wasservorrat gegeben ist, wenn sich der Flüssigkeitspegel am oberen Ende der kürzeren Flüssigkeitsdurchtrittsöffnung befindet, und dass das obere Ende der längeren Flüssigkeitsdurchtrittsöffnung den maximal erlaubten Flüssigkeitspegel anzeigt.

Bei einer bevorzugten Ausführungsform befindet sich der obere Rand der Seitenwand des Außenelementes im montierten Gebrauchszustand knapp oberhalb des oberen Endes der ersten Schar von Öffnungen. Dadurch dient der obere Rand der Seitenwand des Au-βenelements als Überlauf und begrenzt den Pegelstand des Wassers auf wenig höher als das obere Ende der ersten Schar von Öffnungen. Durch diese Funktion des oberen Randes der Seitenwand des Außenelements als Überlauf ermöglicht der Blumentopf auch die Anlage von Hydrokulturen im Außenbereich. Besonders günstig ist es, wenn die Höhe der Seitenwand des Außenelements das 1 bis 1,5-fache, vorzugsweise das 1,1-fache, der Erstreckung der ersten Schar von Öffnungen in Längsrichtung des Innenelements beträgt. Dabei ist es insbesondere für größere Gefäße im Außenbereich sinnvoll, wenn die Höhe der Seitenwand des Außenelements der Erstreckung der ersten Schar von Öffnungen in Längsrichtung des Innenelements entspricht, damit der Überlauf genau dem Maximum des erlaubten Flüssigkeitsstandes entspricht, während für die Verwendung im Innenbereich ein gewisser Überlaufschutz bevorzugt wird.

Das Innenelement kann ein Bodenteil aufweisen oder frei von einem solchen Bodenteil sein. Sofern es ein Bodenteil aufweist, weist der Boden des Außenelements bevorzugt eine Vertiefung auf, die das Bodenteil des Innenelements aufnimmt, um zu verhindern, dass der unterste Teil des Wasservorrats des Außenelements nicht in das Innenelement fließen kann. Dafür ist der Boden des Außenelements bevorzugt zumindest abschnittsweise mit einer größeren Wandstärke als das Bodenteil des Innenelements ausgeführt, wodurch auch der Außenbereich des Außenelements stabiler wird.

Gemäß einer bevorzugten Ausführungsvariante sind mehrere Innenelemente, wie zuvor beschrieben, in demselben Außenelement angeordnet. Bevorzugt weist das Innenelement eine Anordnung von Steckverbindungselementen auf, welche mit entsprechenden Steckverbindungselementen mehrerer, vorzugsweise gleichartiger, Innenelemente verbindbar sind.

Um mehrere gleichartige Innen- bzw. Außenelemente in einer Vorrats- bzw. Transportstellung platzsparend stapeln zu können, ist es günstig, wenn das Innenelement und/oder das Außenelement jeweils in Längsrichtung nach oben hin erweiternde Abschnitte aufweist.

Die Erfindung wird nachstehend anhand von bevorzugten Ausführungsbeispielen in den Zeichnungen weiter erläutert.
Fig. 1 zeigt eine erste Ausführungsform eines erfindungsgemäßen Blumentopfes beim Einstecken eines Innenelements in ein Außenelement.
Fig. 2 zeigt eine Seitenansicht des Innenelements des Blumentopfes gemäß Fig. 1.
Fig. 3 zeigt einen Schnitt entlang der Linie III-III in Fig. 2.
Fig. 4 zeigt eine Draufsicht des Innenelements gemäß Fig. 1 bis 3.
Fig. 5 zeigt einen Schnitt entlang der Linie V-V in Fig. 4.
Fig. 6 zeigt eine Draufsicht des Außenelements des Blumentopfes gemäß Fig. 1.
Fig. 7 zeigt eine Seitenansicht des Außenelements des Blumentopfes gemäß Fig. 1, 6.
Fig. 8 zeigt einen Schnitt entlang der Linie VIII-VIII in Fig. 7.
Fig. 9 zeigt eine Ausführungsvariante des Außenelements gemäß Fig. 6 bis 8, welches für die Aufnahme mehrerer Innenelemente eingerichtet ist.
Fig. 10 zeigt eine zweite Ausführungsform des erfindungsgemäßen Blumentopfes beim Einstecken des Innenelements in das Außenelement.
Fig. 11 zeigt eine Seitenansicht des Innenelements des Blumentopfes gemäß Fig. 10.
Fig. 12 zeigt einen Schnitt entlang der Linie XII-XII in Fig. 11.
Fig. 13 zeigt eine Draufsicht des Innenelements gemäß Fig. 11, 12.
Fig. 14 zeigt einen Schnitt entlang der Linie XIV-XIV in Fig. 13.
Fig. 15 zeigt eine Draufsicht des Außenelements des Blumentopfes gemäß Fig. 10.
Fig. 16 zeigt eine Seitenansicht des Außenelements des Blumentopfes gemäß Fig. 15.
Fig. 17 zeigt einen Schnitt entlang der Linie XVII-XVII in Fig. 16.
Fig. 18 zeigt eine Ausführungsvariante des Außenelements gemäß Fig. 15 bis 17, welches für die Aufnahme mehrerer Innenelemente eingerichtet ist.
Fig. 19 zeigt eine dritte Ausführungsform des erfindungsgemäßen Blumentopfes beim Einstecken des Innenelements in das Außenelement.
Fig. 20 zeigt eine Seitenansicht des Innenelements des Blumentopfes gemäß Fig. 19.
Fig. 21 zeigt einen Schnitt entlang der Linie XXI-XXI in Fig. 20.
Fig. 22 zeigt eine Draufsicht des Innenelements gemäß Fig. 20, 21.
Fig. 23 zeigt einen Schnitt entlang der Linie XXIII-XXIII in Fig. 22.

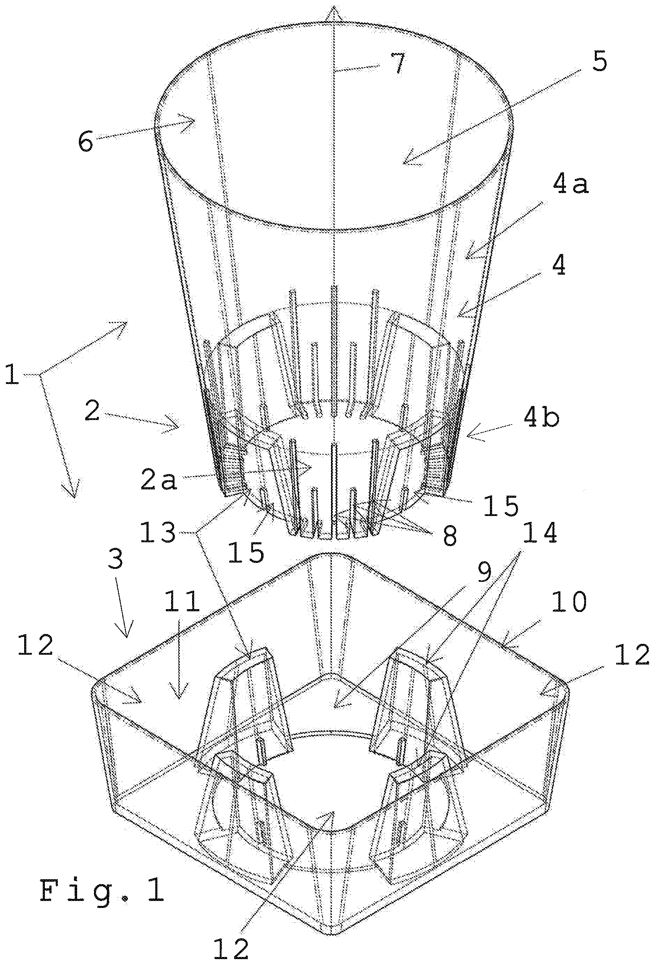

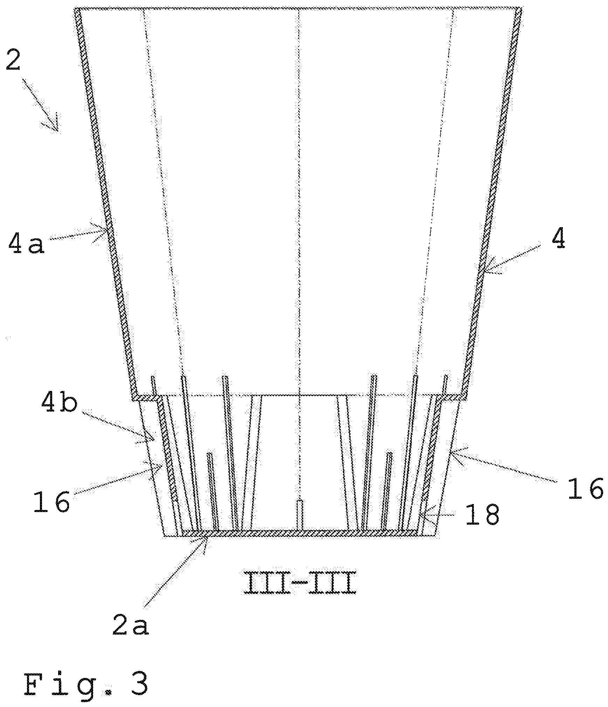

In Fig. 1 ist ein Blumentopf 1 gezeigt, welcher ein Innenelement 2 und ein Außenelement 3 aufweist. Das Innenelement 2 weist einen umlaufenden Mantel 4 auf, welcher einen Aufnahmeraum 5 mit einer oberseitigen Einstellöffnung 6 für eine (nicht dargestellte) Pflanze oder einen Innentopf mit einer Pflanze begrenzt. In der Ausführung der Fig. 1 weist der Mantel 4 einen über mehr als die Hälfte der Höhe des Innenelements 2 erstreckten Aufnahmeabschnitt 4a für die Pflanze auf. Der Aufnahmeabschnitt 4a ist konisch in Richtung einer Längsachse 7 des Innenelements 2 nach oben hin erweitert. Zudem weist der Mantel 4 am unteren Ende einen Bewässerungsabschnitt 4b auf, an welchem mehrere Flüssigkeitsdurchtrittsöffnungen 8 ausgebildet sind, welche weiter unten näher beschrieben werden. Zudem weist das Innenelement 2 in der gezeigten Ausführung ein Bodenteil 2a (vgl. Fig. 3) auf, von dessen umlaufendem Rand der Mantel 4 nach oben absteht.

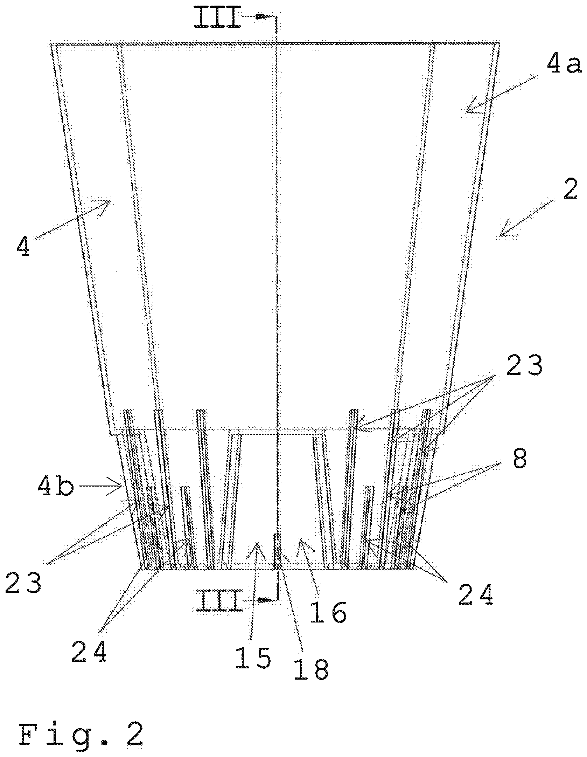

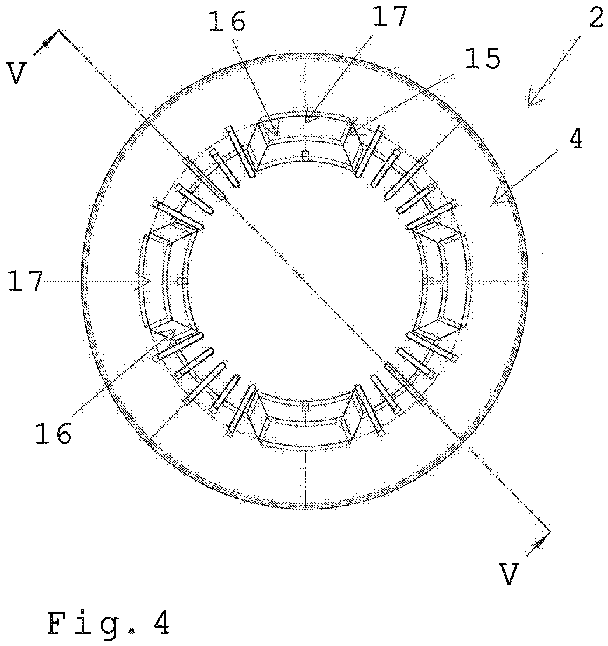

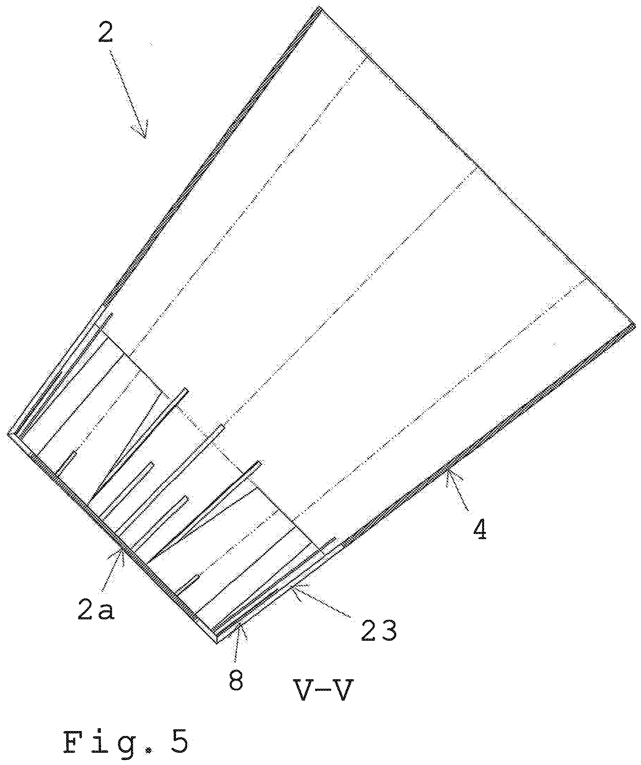

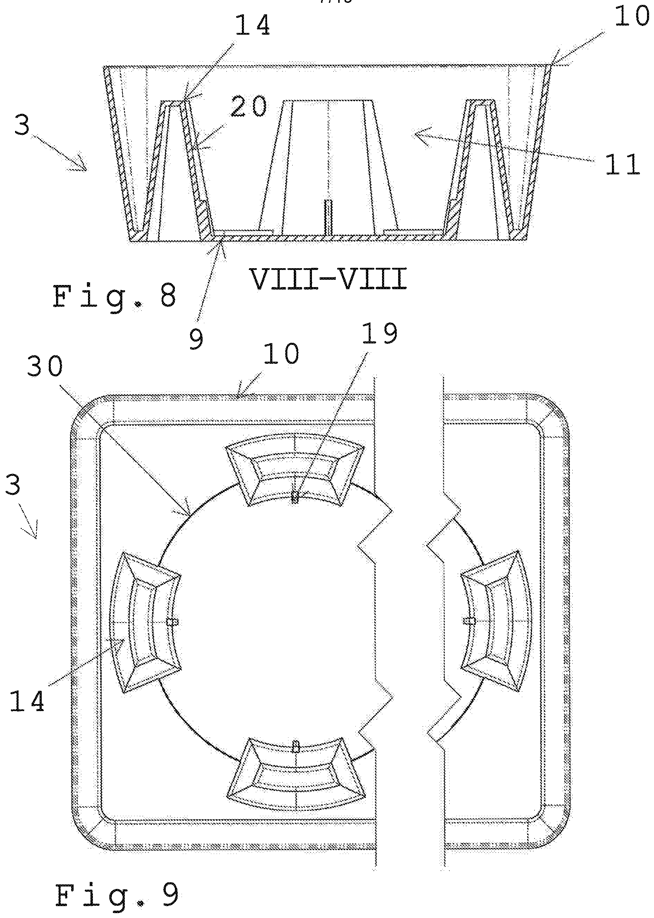

Fig. 9 zeigt eine Variante der Ausführungsform der Fig. 1 bis 8, wobei das Außenelement 3 für die Anordnung mehrerer Innenelemente 2 eingerichtet ist. Hierfür weist die Außenkontur des Außenelements in Draufsicht die Form eines länglichen Rechtecks mit entsprechenden Steckverbindern 14 auf, um mehrere, insbesondere im Querschnitt kreisförmige, nach oben konisch erweiterte Innenelemente 2 aufnehmen zu können.

Das Innenelement 2 wird auf einem Boden 9 des Außenelements 3 abgestellt. Das Außenelement 3 weist eine vom äußeren Rand des Bodens 9 nach oben abstehende, umlaufende Seitenwand 10 auf, so dass das Außenelement 3 als nach oben offene Wanne ausgebildet ist. Die Seitenwand 10 ist nach außen geneigt, um mehrere entsprechende Außenelement 3 stapeln zu können. Der Boden 9 und die Seitenwand 10 begrenzen einen Flüssigkeitsvorratsraum 11 des Au-βenelements 3. Die Seitenwand 10 des Außenelements 3 weist eine Höhe auf, welche zwischen einem herkömmlichen Untersetzer mit umlaufendem Flansch und einem herkömmlichen Außentopf eines Hydrogefäßes liegt. Demnach weist die Seitenwand 10 des Außenelements 3 eine geringere Höhe (d.h. Erstreckung in Richtung der Längsachse 7) als der Mantel 4 des Innenelements 2 auf, wobei das Verhältnis zwischen der Höhe der Seitenwand 10 des Außenelements 3 und der Höhe des Mantels 4 des Innenelements 2 in der gezeigten Ausführung etwa ein Drittel beträgt. Dadurch kann das Außenelement 3 als Reservoir für Gieß- bzw. Nährflüssigkeit fungieren, welche über die Flüssigkeitsdurchtrittsöffnungen 8 ins Innere des Innenelements 2 eintreten kann.

Im bestimmungsgemäßen Gebrauchszustand des Blumentopfes 1, d.h. nach dem Zusammenbau von Innen- 2 und Außenelement 3, sind zwischen dem Mantel 4 des Innenelements 2 und der Seitenwand 10 des Außenelements mehrere Füll- und Sichtöffnungen 12 vorgesehen, welcher einerseits zum Einfüllen von Flüssigkeit in den Flüssigkeitsvorratsraum 11 und andererseits zur Sichtkontrolle eines Pegels der Flüssigkeit in dem Flüssigkeitsvorratsraum 11 des Au-βenelements 3 eingerichtet sind.

Zur Ausbildung großflächiger Füll- und Sichtöffnungen 12 an den vier Eckbereichen des Außenelements 3 weist der Mantel 4 des Innenelements 2 in der gezeigten Ausführung einen im Wesentlichen kreisförmigen Querschnitt auf, wohingegen die Seitenwand 10 des Außenelements 3 in Draufsicht im Wesentlichen rechteckig, vorzugsweise quadratisch mit abgerundeten Ecken, ist.

Wie aus Fig. 1 weiters ersichtlich, ist zwischen dem Außenelement 3 und dem Innenelement 2 eine Steckverbindung 13 vorgesehen, mit welcher das Innenelement 2 im montierten Zustand um dessen Längsachse 7 drehfest und im Wesentlichen unverkippbar am Außenelement 3 angeordnet ist. Die Steckverbindung 13 ist durch zumindest zwei, in der gezeigten Ausführung vier, Steckverbinder 14 und zumindest zwei, in der gezeigten Ausführung vier, entsprechende Steckausnehmungen 15 gebildet.

In der Ausführungsform der Fig. 1 bis 9 sind die Steckausnehmungen 15 als Einbuchtungen 16 in dem Mantel 4 des Innenelements 2 ausgebildet. Im Inneren des Innenelements 2 bilden die Einbuchtungen 16 oberseitige Aufstellflächen 17 für einen (nicht dargestellten) Innentopf. Weiters sind am Mantel 4 im Bereich der Einbuchtungen 16 schlitzförmige Ausnehmungen 18 vorgesehen, welche sich in Richtung der Längsachse 7 erstrecken. Diese schlitzförmigen Ausnehmungen 18 dienen zur Aufnahme entsprechender Vorsprünge 19 an den Steckverbindern 14.

Wie aus Fig. 8 ersichtlich, sind die Steckverbinder 14 als Ausbuchtungen 20 ausgebildet, welche von dem Boden 9 des Außenelements 3 nach oben abstehen.

Bei dieser Ausführung verjüngen sich die Steckverbinder 14 und die Steckausnehmungen 15 jeweils im Querschnitt in Richtung der Längsachse 7 des Innenelements 2 nach oben, d.h. zu den Füll- und Sichtöffnungen 12 hin.

Aus Fig. 9 ist zudem ersichtlich, dass der Boden 9 des Außenelements 3 eine Vertiefung 30 auf, deren Tiefe im Wesentlichen der Wandstärke des Bodenteils 2a des Innenelements 2 entspricht, so dass das Wasser im Wesentlichen vollständig vom Wasservorrat in das Innenelement 2 gelangen kann. Das Bodenteil 2a des Innenelements 2 ist passgenau in der Vertiefung 30 des Außenelements 3 angeordnet. In der gezeigten Ausführung ist die Vertiefung 30 daher in Draufsicht kreisförmig.

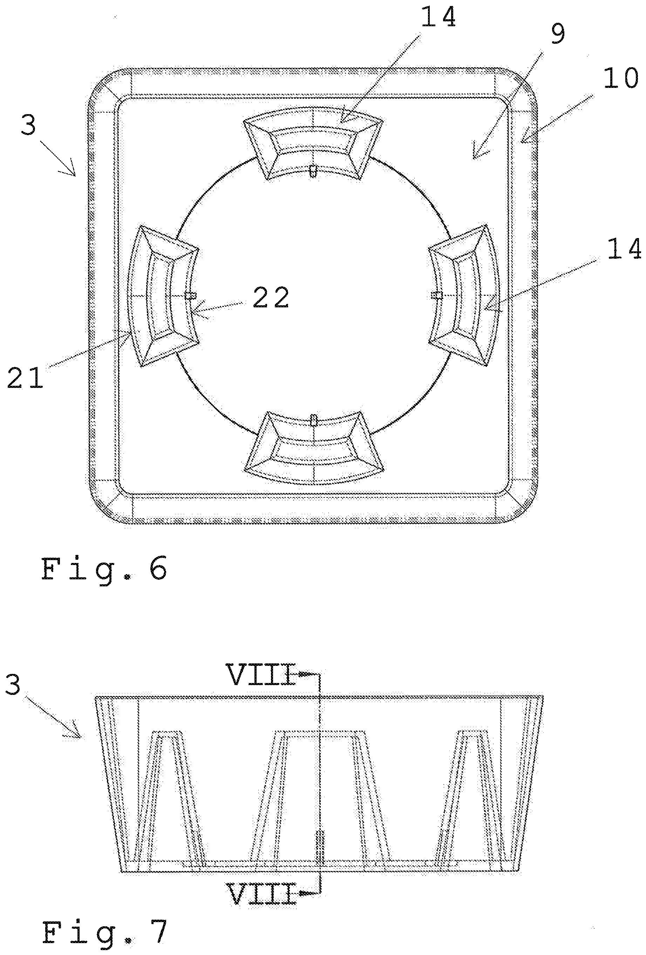

Wie aus Fig. 6 ersichtlich, weist jeder Steckverbinder 14 bei dieser Ausführungsvariante je eine kreisbogenförmige äußere Begrenzungslinie 21 und eine kreisbogenförmige innere Begrenzungslinie 22 auf, deren Verlauf der Krümmung des im Querschnitt kreisförmigen Innenelements 2 entspricht.

Wie aus Fig. 1 bis 5 ersichtlich, sind die Flüssigkeitsdurchtrittsöffnungen 8 des Innenelements durch eine erste Schar von Öffnungen 23, in der gezeigten Ausführung erste Schlitze, und eine zweite Schar von Öffnungen 24, in der gezeigten Ausführung wiederum zweite Schlitze, gebildet. Die erste Schar von Öffnungen 23 weist eine größere Erstreckung in Längsrichtung des Innenelements 2 als die zweite Schar von Öffnungen 24 auf.

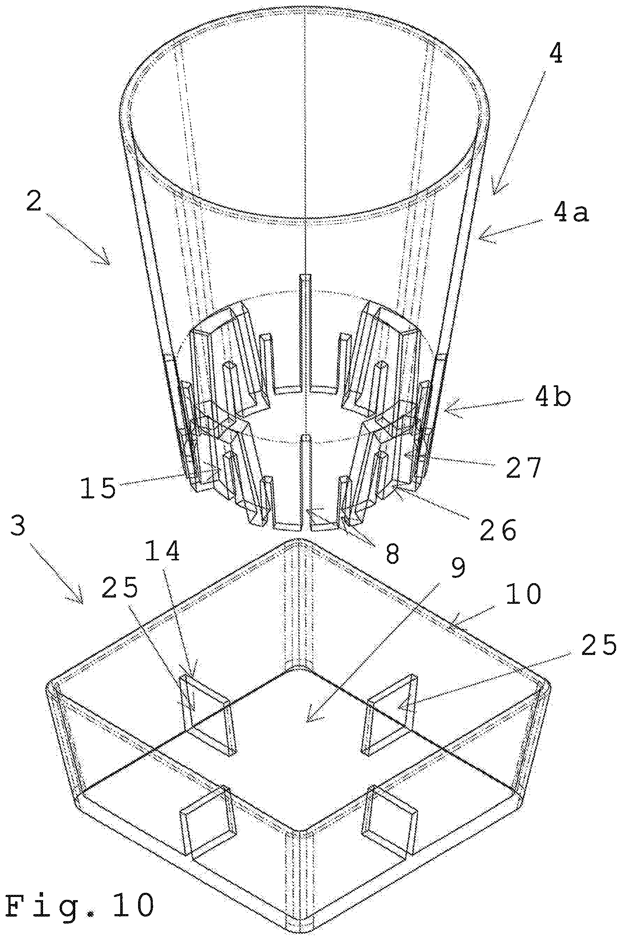

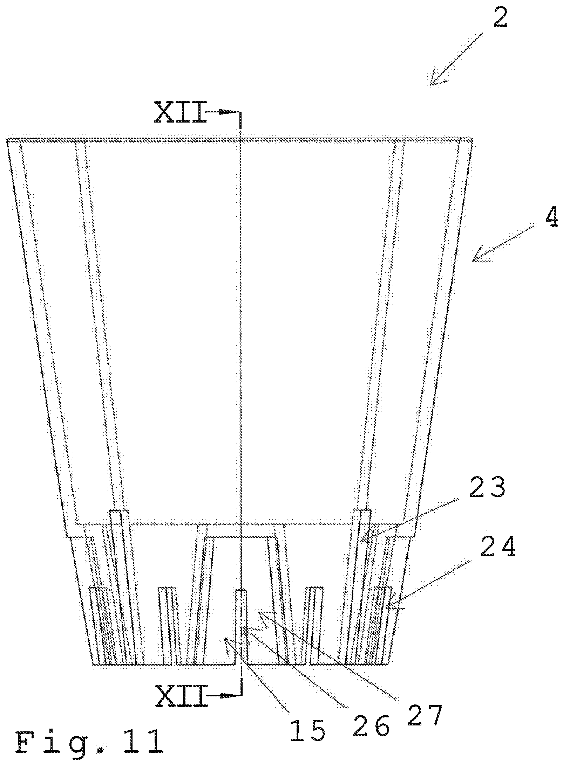

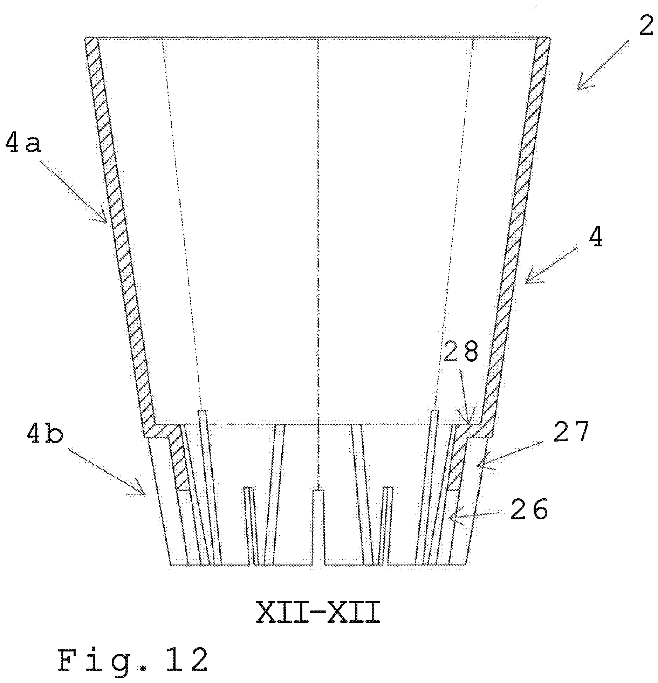

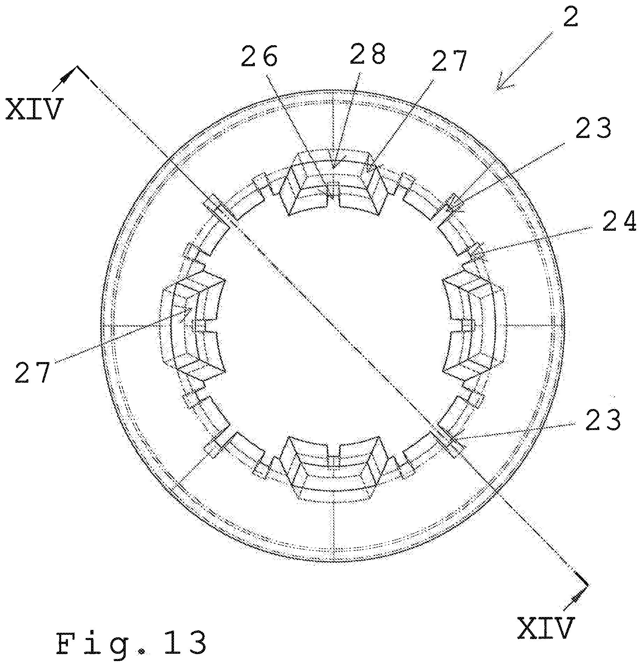

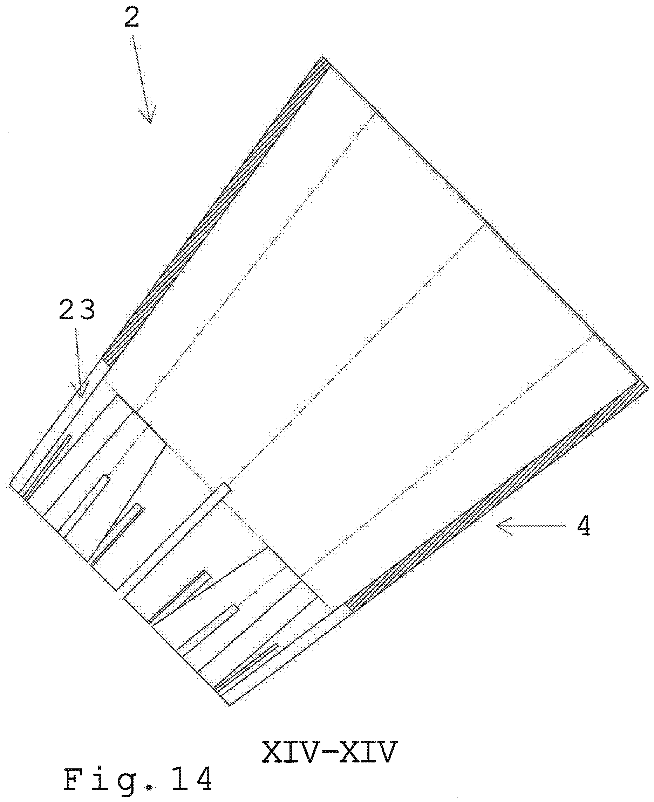

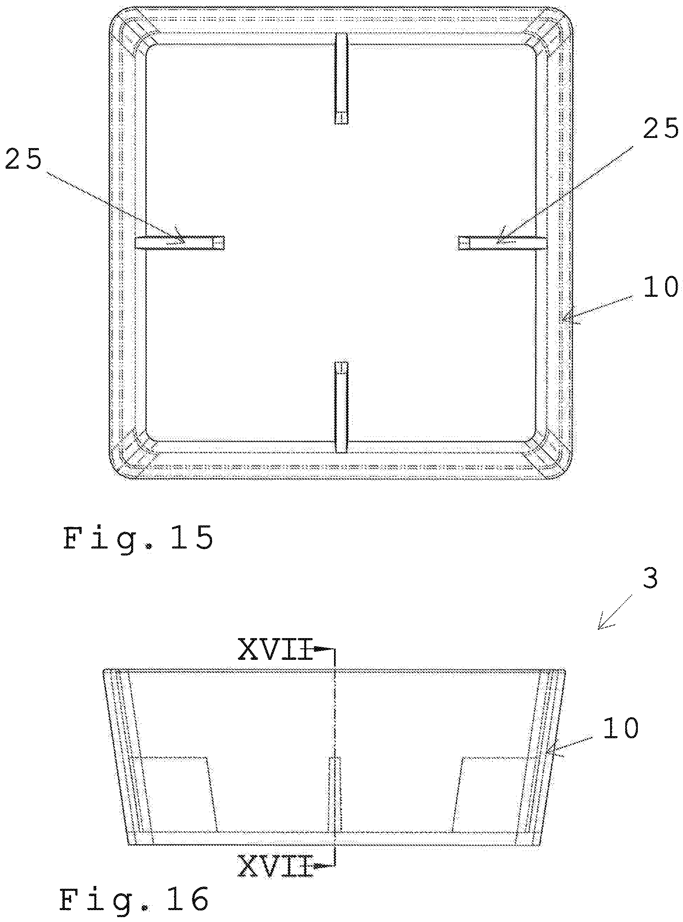

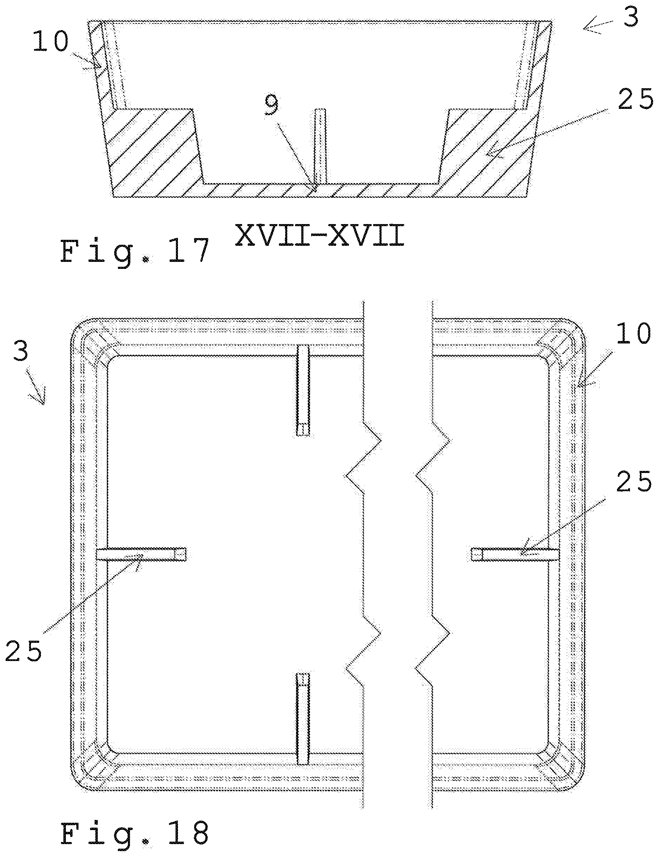

Bei der Ausführungsform der Fig. 10 bis 19 sind als Steckverbinder 14 im Wesentlichen senkrecht zum damit verbundenen Abschnitt der Seitenwand 10 des Außenelements 3 erstreckte Plattenteile 25 vorgesehen, welche im montierten Zustand in schlitzförmigen Steckausnehmungen 26 des Innenelements 2 angeordnet sind. Die schlitzförmigen Steckausnehmungen 26 sind bei dieser Ausführung an Vertiefungen 27 im Mantel 4 des Innenelements 2 ausgebildet. An den Vertiefungen 27 sind im Inneren des Innenelements 2 oberseitige Auflagerflächen 28 für einen (nicht dargestellten) Innentopf ausgebildet.

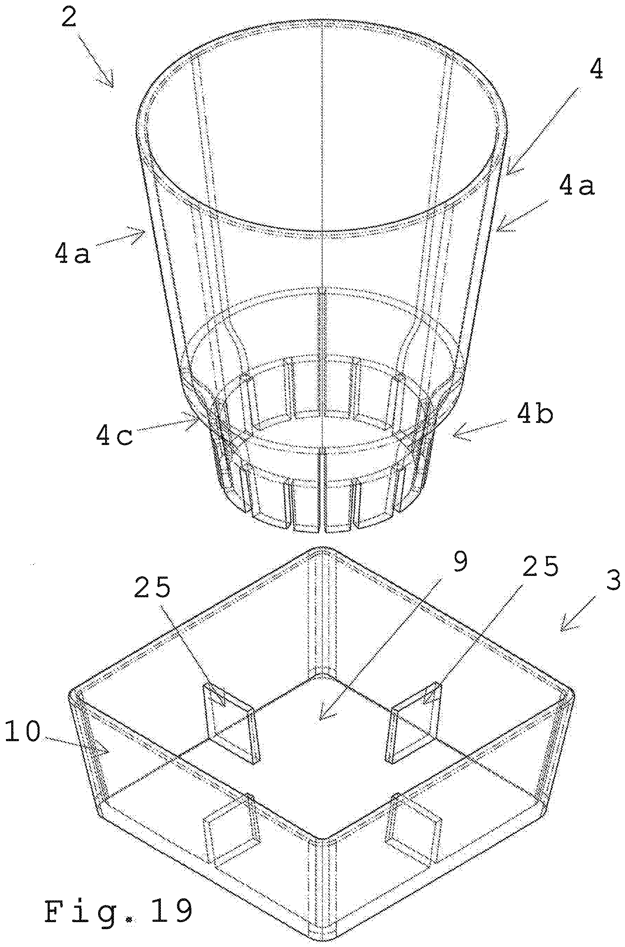

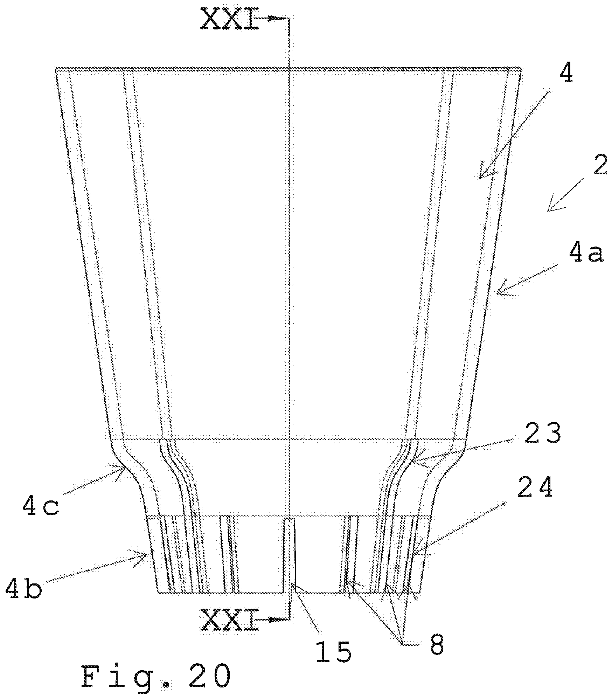

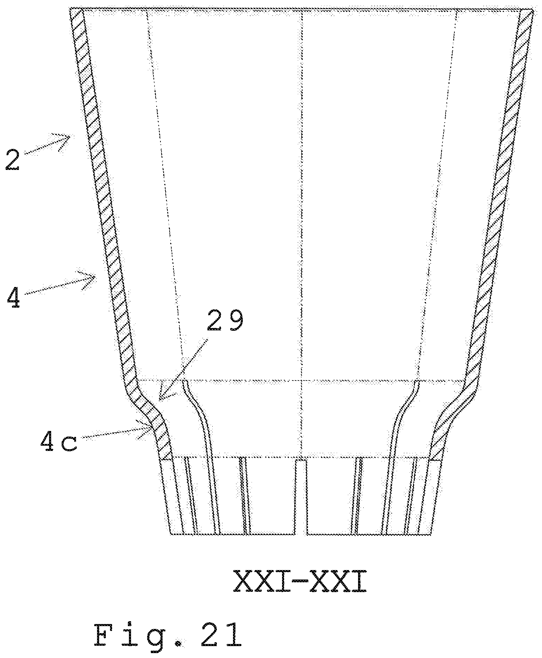

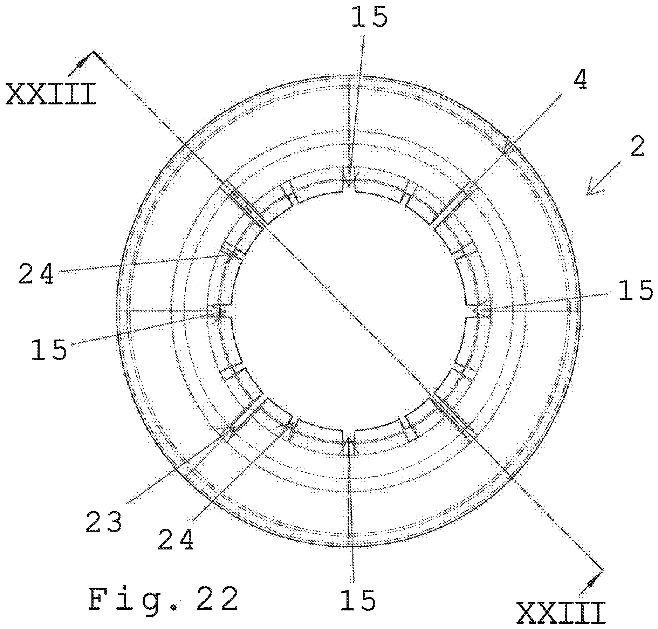

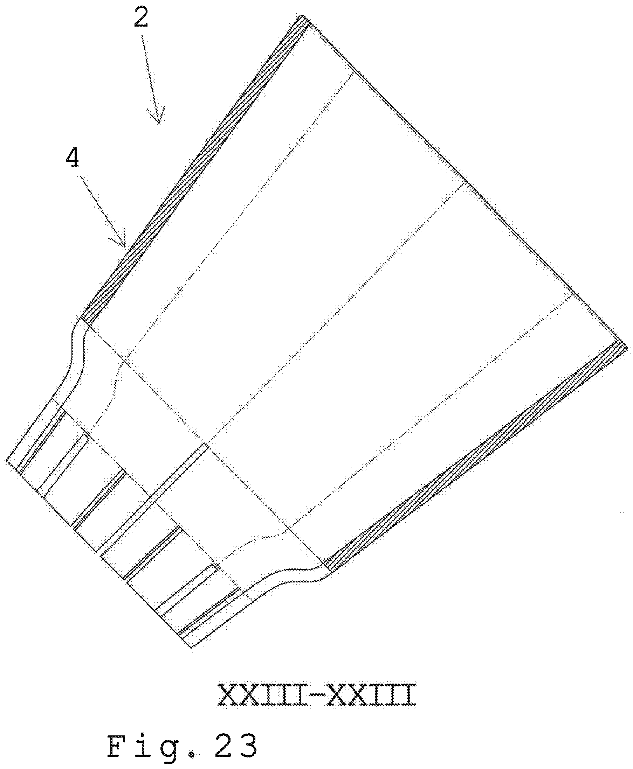

Bei der Ausführungsvariante der Fig. 19 bis 23 weist das Innenelement 2 einen Verjüngungsabschnitt 4c zwischen dem Aufnahmeabschnitt 4a und dem Bewässerungsabschnitt 4b. Dadurch ist an dem Verjüngungsabschnitt 4c im Inneren des Innenelements 2 ein Absatz 29 für einen Innentopf ausgebildet.

## Patentansprüche

1. Blumentopf (1) aufweisend
- ein Innenelement (2) mit einem Mantel (4), an welchem mehrere Flüssigkeitsdurchtrittsöffnungen (8) ausgebildet sind, wobei als Flüssigkeitsdurchtrittsöffnungen (8) des Innenelements eine erste Schar von Öffnungen (23) und eine zweite Schar von Öffnungen (24) vorgesehen sind,
- ein das Innenelement (2) umgebendes Außenelement (3) mit einem Boden (9), einer vom Boden (9) abstehenden Seitenwand (10) und mit einem Flüssigkeitsvorratsraum (11), wobei die Seitenwand (10) des Außenelements (3) eine geringere Höhe als der Mantel (4) des Innenelements (2) aufweist und
- zwischen der Außenseite des Mantels des Innenelements (2) und der Innenseite der Seitenwand des Außenelements (3) zumindest eine Füll- und Sichtöffnung (12) zum Einfüllen von Flüssigkeit in den Flüssigkeitsvorratsraum (11) und zur Sichtkontrolle eines Pegels der Flüssigkeit in dem Flüssigkeitsvorratsraum (11) des Außenelements (3) ausgebildet ist,
**dadurch gekennzeichnet, dass**
- die erste Schar von Öffnungen (23) eine größere Erstreckung in Längsrichtung des Innenelements (2) als die zweite Schar von Öffnungen (24) derart aufweist, dass die unterschiedlich langen Flüssigkeitsdurchtrittsöffnungen (8), nämlich die erste Schar von Öffnungen (23) und die zweite Schar von Öffnungen (24), zur Kontrolle des Flüssigkeitspegels in dem Flüssigkeitsvorratsraum herangezogen werden können.

2. Blumentopf (1) nach Anspruch 1, **dadurch gekennzeichnet, dass** das Verhältnis zwischen der Höhe der Seitenwand (10) des Außenelements (3) und der Höhe des Mantels (4) des Innenelements (2) zwischen 1:5 und 1:1,5, vorzugsweise im Wesentlichen 1:3, beträgt.

3. Blumentopf (1) nach Anspruch 1 oder 2, **dadurch gekennzeichnet, dass** zwischen dem Außenelement (3) und dem Innenelement (2) eine Steckverbindung (13) vorgesehen ist, mit welcher das Innenelement (2) im montierten Zustand um dessen Längsachse (7) dreh- und kippfest am Außenelement (3) angeordnet ist.

4. Blumentopf (1) nach Anspruch 3, **dadurch gekennzeichnet, dass** die Steckverbindung (13) zumindest zwei, vorzugsweise vier, Steckverbinder (14) und zumindest zwei, vorzugsweise vier, entsprechende Steckausnehmungen (15) aufweist.

5. Blumentopf (1) nach Anspruch 4, **dadurch gekennzeichnet, dass** die Steckausnehmungen (15) als Einbuchtungen (16) in dem Mantel (4) des Innenelements (2) ausgebildet sind, wobei an den Einbuchtungen (16) im Inneren des Innenelements (2) oberseitige Aufstellflächen (17) für einen Innentopf ausgebildet sind.

6. Blumentopf (1) nach Anspruch 4 oder 5, **dadurch gekennzeichnet, dass** die Steckverbinder (14) als Ausbuchtungen (20) am Boden (9) des Außenelements (3) ausgebildet sind.

7. Blumentopf (1) nach einem der Ansprüche 4 bis 6, **dadurch gekennzeichnet, dass** sich die Steckverbinder (14) und die Steckausnehmungen (15) jeweils im Querschnitt in Längsrichtung des Innenelements (2) zur Füll- und Sichtöffnung (12) hin verjüngen.

8. Blumentopf (1) nach Anspruch 4, **dadurch gekennzeichnet, dass** als Steckverbinder (14) vorzugsweise im Wesentlichen senkrecht zur Seitenwand (10) des Außenelements (3) angeordnete Plattenteile (25) vorgesehen sind, welche im montierten Zustand in schlitzförmigen Steckausnehmungen (26) des Innenelements (2) angeordnet sind.

9. Blumentopf (1) nach Anspruch 8, **dadurch gekennzeichnet, dass** die schlitzförmigen Steckausnehmungen (26) an Vertiefungen (27) im Mantel (4) des Innenelements (2) ausgebildet sind, wobei an den Vertiefungen (27) im Inneren des Innenelements (2) oberseitige Auflagerflächen (28) für einen Innentopf ausgebildet sind.

10. Blumentopf (1) nach Anspruch 9, **dadurch gekennzeichnet, dass** das Innenelement (2) einen vorzugsweise im Wesentlichen konischen oberen Abschnitt (4a) und einen vorzugsweise im Wesentlichen konischen unteren Abschnitt (4b) aufweist, welche über einen Verjüngungsabschnitt (4c) miteinander verbunden sind, wobei an dem Verjüngungsabschnitt (4c) im Inneren des Innenelements (2) ein Absatz (29) für einen Innentopf ausgebildet ist.

11. Blumentopf (1) nach einem der Ansprüche 1 bis 10, **dadurch gekennzeichnet, dass** der Mantel (4) des Innenelements (2) eine erste Querschnittsform, insbesondere einen im Wesentlichen kreisförmigen Querschnitt, und die Seitenwand (10) des Außenelements (2) eine davon verschiedene zweite Querschnittsform, insbesondere einen im Wesentlichen rechteckigen Querschnitt, vorzugsweise einen im Wesentlichen quadratischen Querschnitt, aufweist.

12. Blumentopf (1) nach einem der Ansprüche 1 bis 11, **dadurch gekennzeichnet, dass** als erste Schar von Öffnungen (23) des Innenelements (2) erste Schlitze (23) und als zweite Schar von Öffnungen (23) zweite Schlitze (24), vorgesehen sind.

13. Blumentopf (1) nach Anspruch 12, **dadurch gekennzeichnet, dass** die Höhe der Seitenwand (10) des Außenelements (3) das 1 bis 1,5-fache der Erstreckung der ersten Schar von Öffnungen (23) in Längsrichtung des Innenelements (2) beträgt.

14. Blumentopf (1) nach einem der Ansprüche 1 bis 13, **dadurch gekennzeichnet, dass** das Innenelement (2) und/oder das Außenelement (3) jeweils in Längsrichtung nach oben hin erweiternde Abschnitte aufweist.

15. Blumentopf nach einem der Ansprüche 1 bis 14, **dadurch gekennzeichnet, dass** mehrere Innenelemente (2) in demselben Außenelement (3) angeordnet sind.

## Claims

1. A flower pot (1) comprising
- an inner element (2) comprising a cover (4), on which a plurality of liquid passage openings (8) are formed,
wherein a first number of openings (23) and a second number of openings (24) are provided as liquid passage openings (8) of the inner element,
- an outer element (3) surrounding the inner element (2), comprising a base (9), a lateral wall (10) protruding from the base (9), and comprising a liquid storage chamber (11), wherein the lateral wall (10) of the outer element (3) comprises a smaller height than the cover (4) of the inner element (2) and
at least one filling and viewing opening (12) is formed between the outer side of the cover of the inner element (2) and the inner side of the lateral wall of the outer element (3) for filling liquid into the liquid storage chamber (11) and for visually inspecting a level of the liquid in the liquid storage chamber (11) of the outer element (3),
**characterized in that**
the first number of openings (23) comprises a larger extension in the longitudinal direction of the inner element (2) than the second number of openings (24) in such a way that the liquid passage openings (8) of different lengths, namely the first number of openings (23) and the second number of openings (24), can be used to control the liquid level in the liquid storage chamber.

2. The flower pot (1) according to claim 1, **characterized in that** the ratio between the height of the lateral wall (10) of the outer element (3) and the height of the cover (4) of the inner element (2) is between 1:5 and 1:1.5, preferably essentially 1:3.

3. The flower pot (1) according to claim 1 or 2, **characterized in that** a plug connection (13) is provided between the outer element (3) and the inner element (2), by means of which plug connection (13) the inner element (2), in the mounted state, is arranged on the outer element (3) in a non-tiltable manner and in a non-rotational manner around the longitudinal axis (7) of the inner element (2).

4. The flower pot (1) according to claim 3, **characterized in that** the plug connection (13) comprises at least two, preferably four, plug connectors (14) and at least two, preferably four, corresponding plug recesses (15).

5. The flower pot (1) according to claim 4, **characterized in that** the plug recesses (15) are formed as notches (16) in the cover (4) of the inner element (2), wherein top-side mounting surfaces (17) for an inner pot are formed on the notches (16) in the interior of the inner element (2).

6. The flower pot (1) according to claim 4 or 5, **characterized in that** the plug connectors (14) are formed as bulges (20) on the base (9) of the outer element (3).

7. The flower pot (1) according to one of claims 4 to 6, **characterized in that** the plug connectors (14) and the plug recesses (15) in each case taper towards the filling and viewing opening (12) in the cross section in the longitudinal direction of the inner element (2).

8. The flower pot (1) according to claim 4, **characterized in that** plate parts (25), which, in the mounted state, are arranged in slit-shaped plug recesses (26) of the inner element (2), are provided as plug connectors (14), which plate parts (25) are preferably arranged essentially perpendicular to the lateral wall (10) of the outer element (3).

9. The flower pot (1) according to claim 8, **characterized in that** the slit-shaped plug recesses (26) are formed on depressions (27) in the cover (4) of the inner element (2), wherein top-side support surfaces (28) for an inner pot are formed on the depressions (27) in the interior of the inner element (2).

10. The flower pot (1) according to claim 9, **characterized in that** the inner element (2) comprises an upper section (4a), which is preferably essentially conical, and a lower section (4b), which is preferably essentially conical, which are connected to one another via a tapering section (4c), wherein a ledge (29) for an inner pot is formed on the tapering section (4c) in the interior of the inner element (2).

11. The flower pot (1) according to one of claims 1 to 10, **characterized in that** the cover (4) of the inner element (2) comprises a first cross sectional shape, in particular an essentially circular cross section, and that the lateral wall (10) of the outer element (2) comprises a second cross sectional shape, which differs therefrom, in particular an essentially rectangular cross section, preferably an essentially square cross section.

12. The flower pot (1) according to one of claims 1 to 11, **characterized in that** first slits (23) are provided as first number of openings (23) of the inner element (2) and second slits (24) are provided as second number of openings (23).

13. The flower pot (1) according to claim 12, **characterized in that** the height of the lateral wall (10) of the outer element (3) is 1 to 1.5-times the extension of the first number of openings (23) in the longitudinal direction of the inner element (2) .

14. The flower pot (1) according to one of claims 1 to 13, **characterized in that** the inner element (2) and/or the outer element (3) in each case comprises sections, which widen upwards in the longitudinal direction.

15. The flower pot (1) according to one of claims 1 to 14, **characterized in that** a plurality of inner elements (2) is arranged in the same outer element (3).

## Revendications

1. Pot de fleurs (1) comprenant :
- un élément interne (2) avec une enveloppe (4), sur laquelle sont réalisées plusieurs ouvertures de passage de liquide (8), dans lequel, en tant qu'ouvertures de passage de liquide (8), un premier groupe d'ouvertures (23) et un deuxième groupe d'ouvertures (24) sont prévus,
- un élément externe (3) entourant l'élément interne (2), avec un fond (9), une paroi latérale (10) partant du fond (9) et avec un réservoir de liquide (11), dans lequel la paroi latérale (10) de l'élément externe (3) présente une hauteur inférieure à celle de l'enveloppe (4) de l'élément interne (2) et
- entre le côté extérieur de l'enveloppe de l'élément interne (2) et le côté intérieur de la paroi latérale de l'élément externe (3) est réalisée au moins une ouverture de remplissage et de visualisation (12) pour l'introduction d'un liquide dans le réservoir de liquide (11) et pour le contrôle visuel d'un niveau de liquide dans le réservoir de liquide (11) de l'élément externe (3),
**caractérisé en ce que**
- le premier groupe d'ouvertures (23) présente une extension dans la direction longitudinale de l'élément interne (2) plus grande que le deuxième groupe d'ouvertures (24), de façon à ce que les ouvertures de passage de liquide (8) de longueurs différentes, à savoir le premier groupe d'ouvertures (23) et le deuxième groupe d'ouvertures (24), peuvent être utilisées pour le contrôle du niveau de liquide dans le réservoir de liquide.

2. Pot de fleurs (1) selon la revendication 1, **caractérisé en ce que** le rapport entre la hauteur de la paroi latérale (10) de l'élément externe (3) et la hauteur de l'enveloppe (4) de l'élément interne (2) est entre 1:5 et 1:1,5, de préférence sensiblement de 1:3.

3. Pot de fleurs (1) selon la revendication 1 ou 2, **caractérisé en ce que**, entre l'élément externe (3) et l'élément interne (2), est prévue une liaison par emboîtement (13) avec laquelle l'élément interne (2) est disposé, dans l'état monté, autour de son axe longitudinal (7) de manière non rotative et de manière non basculante contre l'élément externe (3).

4. Pot de fleurs (1) selon la revendication 3, **caractérisé en ce que** la liaison d'emboîtement (13) comprend au moins deux, de préférence quatre, connecteurs d'emboîtement (14) et au moins, de préférence quatre, évidements d'emboîtement (15) correspondants.

5. Pot de fleurs (1) selon la revendication 4, **caractérisé en ce que** les évidements d'emboîtement (15) sont conçus comme des renfoncements (16) dans l'enveloppe (4) de l'élément interne (2), dans lequel, au niveau des renfoncements (16), sont réalisés, à l'intérieur de l'élément interne (2), des surfaces de pose supérieures (17) pour un pot interne.

6. Pot de fleurs (1) selon la revendication 4 ou 5, **caractérisé en ce que** les connecteurs d'emboîtement (14) sont conçus comme des protubérances (20) sur le fond (9) de l'élément externe (3).

7. Pot de fleurs (1) selon l'une des revendications 4 à 6, **caractérisé en ce que** les connecteurs d'emboîtement (14) et les évidements d'emboîtement (15) se rétrécissent chacun, en ce qui concerne la section transversale dans la direction longitudinale de l'élément interne (2), en direction de l'ouverture de remplissage et de visualisation (12).

8. Pot de fleurs (1) selon la revendication 4, **caractérisé en ce que** les connecteurs d'emboîtement (14) sont des parties de plaques (25) disposées de préférence sensiblement perpendiculairement par rapport à la paroi latérale (10) de l'élément externe (3), qui, dans l'état monté, sont disposées dans des évidements d'emboîtement en forme de fentes (26) de l'élément interne (2).

9. Pot de fleurs (1) selon la revendication 8, **caractérisé en ce que** les évidements d'emboîtement en forme de fentes (26) sont réalisés au niveau de cavités (27) dans l'enveloppe (4) de l'élément interne (2), dans lequel, au niveau des cavités (27), à l'intérieur de l'élément interne (2) sont réalisées des surfaces d'appui supérieures (28) pour un pot interne.

10. Pot de fleurs (1) selon la revendication 9, **caractérisé en ce que** l'élément interne (2) présente une portion supérieure (4a) globalement conique et une portion inférieure (4b) de préférence sensiblement conique, qui sont reliées entre elles par l'intermédiaire d'une portion de rétrécissement (4c), dans lequel, au niveau de la portion de rétrécissement (4c), à l'intérieur de l'élément interne (2), est réalisé un épaulement (29) pour un pot interne.

11. Pot de fleurs (1) selon l'une des revendications 1 à 10, **caractérisé en ce que** l'enveloppe (4) de l'élément interne (2) présente une première forme de section transversale, plus particulièrement une section transversale sensiblement circulaire, et la paroi latérale (10) de l'élément externe (2) présente une deuxième forme de section transversale différente de celle-ci, plus particulièrement une section transversale sensiblement rectangulaire, de préférence une section transversale globalement carrée.

12. Pot de fleurs (1) selon l'une des revendications 1 à 11, **caractérisé en ce que**, en tant que premier groupe d'ouvertures (23) de l'élément interne (2), sont prévues des premières fentes (23) et, en tant que deuxième groupe d'ouvertures (23), sont prévues des deuxièmes fentes (24).

13. Pot de fleurs (1) selon la revendication 12, **caractérisé en ce que** la hauteur de la paroi latérale (10) de l'élément externe (3) représente de 1 à 1,5 fois l'extension du premier groupe d'ouvertures (23) dans la direction longitudinale de l'élément interne (2).

14. Pot de fleurs (1) selon l'une des revendications 1 à 13, **caractérisé en ce que** l'élément interne (2) et/ou l'élément externe (3) présentent chacun des portions s'élargissant vers le haut dans la direction longitudinale.

15. Pot de fleurs (1) selon l'une des revendications 1 à 14, **caractérisé en ce que** plusieurs éléments internes (2) sont disposés dans le même élément externe (3).
